Europäisches Patentamt

European Patent Office

Office européen des brevets

(19)

(11) Veröffentlichungsnummer: **0 239 760 B1**

(12) # EUROPÄISCHE PATENTSCHRIFT

(45) Veröffentlichungstag der Patentschrift:
**22.05.91 Patentblatt 91/21**

(51) Int. Cl.⁵: **H04N 7/087, H04N 5/782, H04N 7/08**

(21) Anmeldenummer: **87101955.0**

(22) Anmeldetag: **12.02.87**

(54) **Verfahren zum Heraussuchen der gewünschten Sprachinformation beim Empfang von Fernsehsignalen mit mehreren Tonkanälen.**

Die Akte enthält technische Angaben, die nach dem Eingang der Anmeldung eingereicht wurden und die nicht in dieser Patentschrift enthalten sind.

(30) Priorität: **29.03.86 DE 3610600**

(43) Veröffentlichungstag der Anmeldung:
**07.10.87 Patentblatt 87/41**

(45) Bekanntmachung des Hinweises auf die Patenterteilung:
**22.05.91 Patentblatt 91/21**

(84) Benannte Vertragsstaaten:
**DE FR GB IT**

(56) Entgegenhaltungen:
**EP-A- 0 112 589**

(56) Entgegenhaltungen:
**GB-A- 2 126 002**
**IEEE TRANSACTIONS ON CONSUMER ELECTRONICS, Band CE-25, Nr. 3, Juli 1979, Seiten 246-250, IEEE, New York, US; N. TANTON et al.: "UK teletext-evolution and potential"**
**FERNSEH- UND KINOTECHNIK, Band 39, Nr. 10, Oktober 1985, Seiten 472-480, Heidelberg, DE; U. MESSERSCHMID: "Fernsehnormen für Rundfunksatelliten. Das D2-MAC/Paket-Verfahren in der MAC-Systemfamilie"**

(73) Patentinhaber: **GRUNDIG E.M.V. Elektro-Mechanische Versuchsanstalt Max Grundig holländ. Stiftung & Co. KG. Kurgartenstrasse 37 W-8510 Fürth/Bay. (DE)**

(72) Erfinder: **Hegendörfer, Max, Dipl.-Ing. Grundig E.M.V. Max Grundig holländ. Stiftung & Co. KG. Kurgartenstrasse 37 D-8510 Fürth/Bay. (DE)**

## Beschreibung

Die vorliegende Erfindung betrifft ein Verfahren zum Heraussuchen der gewünschten Sprachinformation beim Empfang von Fernsehsignalen mit den im Oberbegriff des Anspruchs 1 angegebenen Merkmalen.

Ausgangspunkt für das Satelliten-Fernsehen ist der Gedanke, eine länderübergreifende Übertragung von Fernsehsendungen vorzunehmen. Hierzu soll für alle Länder ein gemeinsamer Bildinhalt übertragen werden. Die zugehörige Tonübertragung soll aber in vielen verschiedenen Sprachen erfolgen, so daß z. B. Zuschauer in Deutschland den Ton in deutscher Sprache, Zuschauer in England den Ton in englischer Sprache, Zuschauer in Frankreich den Ton in französicher Sprache empfangen können, usw.

Ferner kann zusätzlich zu einer "akustischen" Übertragung des Tonsignals in verschiedenen Sprachen auch eine Übertragung des Tonsignals in weiteren Sprachen in Form von Untertiteln erfolgen, so daß der Empfänger (Videorecorder, automatische Kopfstation für Gemeinschaftsempfangsanlagen, Satelliten-Fernsehempfänger) die Möglichkeit bietet, die zu einer Bildsendung gehörige Toninformation entweder "akustisch" in einer 1. Sprache (z.B. Deutsch) oder in einer 2. Sprache (z.B. Englisch) oder in einer 3. Sprache (z.B. Französisch) zu empfangen und/oder "bildlich" in Form von Untertiteln in einer 4. Sprache (z.B. Italienisch) oder einer 5. Sprache (z.B. Spanisch), usw.

Zum Heraussuchen der gewünschten Sprache muß der Benutzer eine oder mehrere Tasten betätiggen, welche entweder am Empfangsgerät selbst oder an einer Fernbedienung angeordnet sind. Dies ist aber umständlich und zeitaufwendig.

Aus den Patentanmeldungen GB-A-2 126 002 und EPA-0 112 589 ist es bereits bekannt, bei der Aufzeichnungsprogrammierung eines Videorecorders jeder aufzuzeichnenden Sendung eine Priorität zuzuordnen. Dies bewirkt, daß beim eigentlichen Aufzeichnungsvorgang im Falle von zeitlichen Überschneidungen der aufzuzeichnenden Sendungen die Sendung mit der höheren Priorität vollständig aufgezeichnet wird.

Der vorliegenden Erfindung liegt die dem gegenüber ganz andere Aufgabe zugrunde, ein Verfahren anzugeben, mittels dessen der Bedienungsaufwand beim Aussuchen einer gewünschten Sprachinformation aus einer größeren Anzahl von zur Verfügung stehenden Sprachinformationen bei der Übertragung von Fernsehsignalen vereinfacht ist.

Diese Aufgabe wird durch die im Anspruch 1 angegebenen Merkmale gelöst.

Vorteilhafte Weiterbildungen ergeben sich aus den Unteransprüchen.

Die Vorteile der Erfindung liegen insbesondere darin, daß der Benutzer nur ein einziges Mal, und zwar vor der Inbetriebnahme des Empfangsgerätes, entscheiden muß, welche Priorität er welcher Sprache zuordnet. Diese Prioritätszuordnung bleibt in der Praxis lange Zeit erhalten, so daß dem Benutzer aus einer Vielzahl von verschiedenen Sprachen, welche zusammen mit einer Bildsendung übertragen werden, immer automatisch diejenige angeboten wird, die für ihn die jeweils höchste Priorität besitzt. Ein weiterer Vorteil besteht aber auch darin, daß die Prioritätszuordnung, falls es aus irgendwelchen Gründen gewünscht wird, schnell und mit einfachen Mitteln geändert werden kann. Weitere Vorteile ergeben sich aus Ausführungsbeispielen, welche im folgenden näher erläutert werden.

Ein Videorecorderbesitzer möchte seinen Videorecorder zur Aufzeichnung von Satelliten-Fernsehsignalen vorbereiten. Der Videorecorderbesitzer sei Deutscher, sei ferner der englischen und französischen Sprache kundig und beherrsche auch etwas Italienisch. Folglich ordnet der Videorecorderbesitzer der deutschen Sprache die höchste Priorität, der englischen Sprache die zweithöchste Priorität, der französischen Sprache die dritthöchste Priorität und der italienischen Sprache die vierthöchste Priorität zu. Diese Prioritätszuordnung wird mittels eines Programmiervorganges, welcher dem Fachmann grundsätzlich geläufig ist und deshalb nicht näher erläutert wird, dem Videorecorder mitgeteilt und dort in geeigneter Form abgespeichert.

Ein Satelliten-Fernsehsignal, dessen zugehörige Tonsignale simultan in deutscher, englischer und französischer Sprache sowie in Form von Untertiteln in italienischer, schwedischer und finnischer Sprache übertragen werden, enthält ferner verschiedene Kenninformationen, die angeben, in welchen Sprachen die das Satelliten-Fernsehsignal begleitenden Tonsignale angeboten werden. Weiterhin geht aus der einer Sprache zugeordneten Kenninformation hervor, ob diese Sprache direkt "akustisch" wiedergebbar ist oder in Form von Untertiteln übertragen wird. Ferner erlaubt die Kenninformation einen selektiven Zugriff auf die ausgewählte Sprachinformation.

Soll nun ein solches Satelliten-Fernsehsignal mit dem oben beschriebenen Videorecorder aufgezeichnet werden, dann wird durch Vergleich der im Satelliten-Fernsehsignal übertragenen Kenninformation mit der im Videorecorder (oder gegebenenfalls auch in einem Zusatzgerät) abgespeicherten Prioritätsinformation überprüft, ob die Sprache mit der höchsten Priorität, im oben angegebenen Fall die deutsche Sprache, zur Verfügung steht oder nicht.

Steht die Sprache mit der höchsten Priorität zur Verfügung, wie es im obigen Beispiel der Fall ist, dann wird als Begleitton zur Bildsendung die deutsche Sprache verwendet.

Steht diese nicht zur Verfügung, dann wird im zweiten Schritt überprüft, ob die Sprache mit der nächsthöheren Priorität zur Verfügung steht, usw.

Auf diese Weise wird immer automatisch diejenige Sprache herausgesucht, welche von den angebotenen Sprachen die höchste Priorität besitzt.

Eine vorteilhafte Weiterbildung der Erfindung kann darin bestehen, in den Videorecorder einen Videotextdecoder einzubauen. Mittels dieses Videotextdecoders wäre es Beispielsweise möglich, bestimmte Videotextseiten, welche im Rahmen des Videotextdienstes übertragen werden und welche Untertitel in einer beliebigen Sprache zu der momentan gesendeten Bildinformation enthalten, zu decodieren, in das zugehörige FBAS-Signal einzublenden und zusammen mit diesem aufzuzeichnen. Beim Abspielen dieser Aufzeichnung wäre dann eine erste, das Bildsignal begleitende Sprache "akustisch" und eine zweite Sprache in Form von Untertiteln "visuell" wiedergebbar. Die Auswahl der oben genannten Videotextseite(n) kann entweder manuell oder mittels eines Programmiervorganges erfolgen.

Die Zuordnung von Prioritäten zu den verschiedenen Sprachen kann auch in Kopfstationen für Gemeinschafts-Empfangsanlagen erfolgen. Dort wäre von einer Bedienperson zu überprüfen, welche Sprache den an die Gemeinschafts-Empfangsanlage angeschlossenen Teilnehmern am ehesten gerecht wird. Dieser Sprache wird die höchste Priorität zuerkannt. Folglich wird diese Sprache immer dann, wenn sie als Begleit-Toninformation zu einer Sendung angeboten wird, herausgesucht und wiedergegeben. Wird die Sprache mit der höchsten Priorität nicht angeboten, dann wird diejenige mit der zweithöchsten Priorität herausgesucht, usw.

Ein weiteres bevorzugtes Ausführungsbeispiel ergibt sich bei der Anwendung der Erfindung in Satelliten-Fernsehempfängern. Beispielsweise kann am Bildschirm eines solchen Satelliten-Fernsehempfängers eingeblendet werden, welche Sprachen momentan angeboten werden. Diese Einblendung wird vorteilhafterweise in der Reihenfolge der eingegebenen Prioritäten erfolgen. Ferner können an derartigen Satelliten-Fernsehempfängern optische Einrichtungen, wie z. B. Ziffernanzeigen oder Leuchtdioden, angebracht werden, die anzeigen, welche verschiedenen Sprachen simultan zu der momentan empfangenen Bildsendung übertragen werden. So kann der Benutzer jeder von beispielsweise fünf Leuchtdioden eine der fünf für ihn prioritätshöchsten Sprachen zuordnen und die Leuchtdioden in beliebiger Weise kennzeichnen, beispielsweise durch neben den Leuchtdioden angeordnete Aufkleber. Bei der Wiedergabe einer Satelliten-Fernsehsendung erkennt der Benutzer dann sofort, welche die momentane Bildsendung begleitende Sprachen übertragen werden, bzw. ob zu der momentanen Bildsendung eine Sprachinformation gesendet wird, die er versteht, oder nicht. Verwendet man mehrfarbige Leuchtdioden, dann kann durch die verschiedenen Farben auch angezeigt werden, welche Sprache momentan gewählt ist und/oder ob eine bestimmte Sprache in "akustischer" Form oder in Form von Untertiteln empfangen werden kann.

Eine weitere vorteilhafte Weiterbildung der Erfindung besteht darin, eine Sprache in akustischer Form und gleichzeitig eine andere Sprache in Form von Untertiteln auszuwählen. So könnte beispielsweise die eine Bildsendung begleitende Toninformation in deutscher Sprache gehört werden und gleichzeitig in englischer Sprache in Form von Untertiteln auf dem Bildschirm des Satelliten-Fernsehempfängers dargestellt werden.

Die Entscheidung darüber, ob die englische Sprache in Form von Untertiteln gleichzeitig zur akustischen Wiedergabe der deutschen Sprache empfangen werden soll, trifft der Benutzer ebenfalls durch Vorprogrammierung. So könnte der Benutzer durch Eingabe eines wählbaren Prioritätsabstandes, z. B. "2", vorprogrammieren, daß dann, wenn eine in Form von Untertiteln übertragene Sprache um mehr als 2 Prioritätsstufen höher eingeordnet ist als die akustisch empfangbare Sprache mit der höchsten Priorität, stets eine gleichzeitige Wiedergabe von Sprache mit geringerer Priorität in akustischer Form und Sprache mit höherer Priorität in Form von Untertiteln stattfindet.

Bei der Verwendung des Verfahrens nach der vorliegenden Efindung bei Fernsehempfängern oder Videorecordern besteht natürlich die Möglichkeit die durch die Prioritätszuordnung im Sinne einer Initialisierung getroffene Sprachauswahl zu modifizieren.

## Ansprüche

1. Verfahren zum Heraussuchen der gewünschten Sprachinformation beim Empfang von Fernsehsignalen, bei denen die den Bildinhalt begleitende Sprach-Information simultan in verschiedenen Sprachen angeboten wird, wobei zusätzlich zur Bild- und Sprachinformation eine Kenninformation übertragen wird, welche die einzelnen übertragenen Sprachen charakterisiert und einen selektiven Zugriff auf sie erlaubt,
dadurch gekennzeichnet, daß der Benutzer vor der Inbetriebnahme des Empfangsgerätes verschiedenen Sprachen verschiedene Prioritäten zuordnet und das Empfangsgerät auf diese Weise vorprogrammiert, und daß das Empfangsgerät beim Empfang von Fernsehsignalen durch vergleich der die verschiedenen Sprachen charakterisierenden Kenninformation mit der im Empfangsgerät abgespeicherten vorprogrammierten Prioritätsinformation automatisch aus den angebotenen Sprachen diejenige(n) mit der höchsten Priorität heraussucht.

2. Verfahren nach Anspruch 1, dadurch gekennzeichnet, daß das Empfangsgerät ein Videorecorder ist.

3. Verfahren nach Anspruch 1, dadurch gekennzeichnet, daß das Empfangsgerät eine Kopfstation für eine Gemeinschaftsempfangsanlage ist.

4. Verfahren nach Anspruch 1, dadurch gekennzeichnet, daß das Empfangsgerät ein Fernsehempfänger ist.

5. Verfahren nach Anspruch 1, dadurch gekennzeichnet, daß das Empfangsgerät ein Satelliten-fernsehempfänger ist.

6. Verfahren nach einem der Ansprüche 1 bis 5, dadurch gekennzeichnet, daß die Sprache in Form von Untertiteln wiedergegeben wird.

7. Verfahren nach einem der Ansprüche 1 bis 5, dadurch gekennzeichnet, daß eine erste Sprache in Form von akustischer Information und gleichzeitig eine zweite Sprache in Form von Untertiteln wiedergegeben wird.

8. Verfahren nach Anspruch 7, dadurch gekennzeichnet, daß die zweite Sprache in Form von Untertiteln nur dann wiedergegeben wird, wenn die Differenz der Prioritäten zwischen Sprache in akustischer Form und Sprache in Form von Untertiteln größer als ein vorgebbarer Wert ist.

9. Verfahren nach Anspruch 2, dadurch gekennzeichnet, daß ein in den Videorecorder eingebauter Videotextdecoder eine oder mehrere automatisch herausgesuchte Untertitelseiten decodiert, daß die Untertitel in das zugehörige FBAS-Signal eingeblendet werden, und daß eine magnetische Aufzeichnung des erhaltenen Signals erfolgt.

10. Verfahren nach Anspruch 2, dadurch gekennzeichnet, daß ein im Videorecorder eingebauter Videotextdecoder eine oder mehrere manuell herausgesuchte Untertitelseiten decodiert, daß die Untertitel in das zugehörige FBAS-Signal eingeblendet werden, und daß eine magnetische Aufzeichnung des erhaltenen Signals erfolgt.

11. Verfahren nach Anspruch 4 oder 5, dadurch gekennzeichnet, daß am Fernsehempfänger optisch angezeigt wird, welche Sprachen simultan zu der momentan empfangenen Bildsendung übertragen werden.

12. Verfahren nach Anspruch 11, dadurch gekennzeichnet, daß die optische Anzeige mittels Ziffern erfolgt und höhere Ziffern kleinere Prioritäten charakterisieren.

13. Verfahren nach Anspruch 11, dadurch gekennzeichnet, daß die optische Anzeige mittels Leuchtdioden erfolgt, deren Anordnung den zugeordneten Prioritäten entspricht.

14. Verfahren nach Anspruch 12 oder 13, dadurch gekennzeichnet, daß die optische Anzeige mehrfarbig erfolgt.

## Claims

1. Method for finding desired speech information during the reception of television signals in which the speech information accompanying the picture content is offered simultaneously in various languages and identification information being transmitted in addition to the picture and speech information which characterises the individual languages transmitted and allows them to be selectively accessed, characterised in that the user, before taking the receiving set into operation, allocates different priorities to different languages and pre-programmes the receiving set in this manner, and that the receiving set, during the reception of television signals, automatically selects from the languages offered the one (s) with the highest priority by comparing the identification information characterising the various languages by means of the pre-programmed priority information stored in the receiving set.

2. Method according to Claim 1, characterised in that the receiving set is a video recorder.

3. Method according to Claim 1, characterised in that the receiving set is a head station for a community receiving system.

4. Method according to Claim 1, characterised in that the receiving set is a television receiver.

5. Method according to Claim 1, characterised in that the receiving set is a satellite television receiver.

6. Method according to one of Claims 1 to 5, characterised in that the language is reproduced in the form of subtitles.

7. Method according to one of Claims 1 to 5, characterised in that a first language is reproduced in the form of audible information and, at the same time, a second language is reproduced in the form of subtitles.

8. Method according to Claim 7, characterised in that the second language is only reproduced in the form of subtitles if the difference in the priorities between language in audible form and language in the form of subtitles is greater than a predeterminable value.

9. Method according to Claim 2, characterised in that a teletext decoder built into the video recorder decodes one or more automatically selected subtitle pages, that the subtitles are inserted into the associated composite colour television signal and that the signal obtained is magnetically recorded.

10. Method according to Claim 2, characterised in that a teletext decoder built into the video recorder decodes one or more manually selected subtitle pages, that the subtitles are inserted into the associated composite colour television signal and that the signal obtained is magnetically recorded.

11. Method according to Claim 4 or 5, characterised in that a visual indication of which languages are transmitted simultaneously with the currently received picture transmission is provided on the television receiver.

12. Method according to Claim 11, characterised in that the visual indication is effected by means of numbers and higher numbers characterise lower priorities.

13. Method according to Claim 11, characterised in that the visual indication is effected by means of light-emitting diodes, the arrangement of which corresponds to the priorities allocated.

14. Method according to Claim 12 or 13, characterised in that the visual indication is multicoloured.

## Revendications

1. Procédé pour sélectionner l'information en languague désirée lors de la réception de signaux de télévision, dans lesquels l'information en languague accompagnant le contenu de l'image est proposée simultanément en différentes langues, et selon lequel en plus de l'information en images et de l'information en languague est transmise une information caractéristique caractérisant les différentes langues transmises et permet un accès sélectif à ces langues, caractérisé en ce qu'avant la mise en service de l'appareil récepteur, l'utilisateur associe des priorités différentes à différentes langues et programme de cette manière au préalable l'appareil récepteur et que, lors de la réception de signaux de télévision, l'appareil récepteur sélectionne automatiquement, parmi les langues proposées, celle(s) possédant la priorité la plus élevée, par comparaison de l'information caractéristique, qui caractérise les différentes langues, à l'information de priorité préalablement programmée et mémorisée dans l'appareil récepteur.

2. Procédé selon la revendication 1, caractérisé en ce que l'appareil récepteur est un enregistreur vidéo.

3. Procédé selon la revendication 1, caractérisé en ce que l'appareil récepteur est un poste de tête pour une installation de réception commune.

4. Procédé selon la revendication 1, caractérisé en ce que l'appareil récepteur est un récepteur de télévision.

5. Procédé selon la revendication 1, caractérisé en ce que l'appareil récepteur est un récepteur de télévision par satellite.

6. Procédé selon l'une des revendications 1 à 5, caractérisé en ce que en languague est reproduit sous la forme de sous-titres.

7. Procédé selon l'une des revendications 1 à 5, caractérisé en ce qu'un premier languague est reproduit sous la forme d'une information acoustique et qu'un second languague est reproduit simultanément sous la forme de sous-titres.

8. Procédé selon la revendication 7, caractérisé en ce que le second languague n'est reproduit sous la forme de sous-titres que lorsque la différence entre les priorités du languague reproduit sous forme acoustique et du languague reproduit sous forme de sous-titre est supérieure à une valeur pouvant être prédéterminée.

9. Procédé selon la revendication 2, caractérisé en ce qu'un décodeur vidéotex monté dans l'enregistreur vidéo décode décode de façon automatique une ou plusieurs pages de sous-titres sélectionnés, que les sous-titres sont insérés dans le signal complexe de télévision associé et que le signal obtenu est enregistré magnétiquement.

10. Procédé selon la revendication 2, caractérisé en ce qu'un décodeur vidéotex monté dans l'enregistreur vidéo décode une ou plusieurs pages de sous-titres extraites manuellement, que les sous-titres sont insérés dans le signal complexe de télévision associé et que le signal obtenu est enregistré magnétiquement.

11. Procédé selon la revendication 4 ou 5, caractérisé en ce qu'un affichage optique des langues transmises en même temps que l'émission de l'image reçue au même instant est réalisé dans le récepteur de télévision.

12. Procédé selon la revendication 11, caractérisé en ce que l'affichage optique est réalisé à l'aide de chiffres et que des chiffres plus élevés caractérisent des priorités plus faibles.

13. Procédé selon la revendication 11, caractérisé en ce que l'affichage optique est réalisé au moyen de diodes à luminescence, dont la disposition correspond aux priorités associées.

14. Procédé selon la revendication 12 ou 13, caractérisé en ce que l'affichage optique s'effectue en plusieurs couleurs.